# EUROPEAN PATENT APPLICATION

(11) **EP 1 914 686 A1**
(43) Date of publication of application: **23.04.2008**
(21) Application number: 07118481.6
(22) Date of filing: 15.10.2007
(51) Int. Cl.: G07B 15/00, G08G 1/017

(54) **Vehicle registration plate archive system and method of operating the same**

(30) Priority: 17.10.2006 JP 2006282214
(71) Applicant: Mitsubishi Heavy Industries, Ltd., Tokyo 108-8215 (JP)
(72) Inventor: Kaga, Tomoya c/o Mitsubishi Heavy Indus. Ltd., Kobe Hyogo-ken (JP)
(74) Representative: Henkel, Feiler & Hänzel

(57) **Abstract**

A vehicle registration plate archive system is provided with an exit-side vehicle registration plate imaging device (34) obtaining an exit-side vehicle registration plate image; an exit monitoring apparatus (40) monitoring and controlling the exit-side vehicle registration plate imaging device (34); an entrance-side vehicle registration plate imaging device (10) obtaining an entrance-side vehicle registration plate image; an entrance monitoring apparatus (18) monitoring and controlling the entrance-side vehicle registration plate imaging device; and an information processing apparatus (16). The information processing apparatus (16) includes: an exit information database (16b) storing the exit-side vehicle registration plate image; an entrance information database (16a) storing the entrance-side vehicle registration plate image; and a processing unit (16c) adapted to search the exit-side vehicle registration plate image and the entrance-side vehicle registration plate image for determining whether the exit-side vehicle registration plate image matches with a vehicle registration number indicated on the entrance-side vehicle registration plate image.

## Description

### Background of the Invention

### 1. Field of the Invention

The present invention relates to a vehicle registration plate archive system and a method of operating the same, more particularly, to a system and method for archiving images obtained from vehicle registration plates attached to motor vehicles.

### 2. Description of the Related Art

In order to obtain images of vehicle registration plates of passing vehicles, imaging devices (such as cameras) are often installed at entrance gates (or ticket issuing gates) and/or exit toll gates of toll roads. The obtained registration plate images are subjected to optical character recognition to identify the vehicle registration numbers. In a typical toll collection system, the identified vehicle registration plate numbers are written onto toll tickets issued at the ticket issuing gate, and toll collectors at exit toll gates manually check the correspondences between the vehicle registration numbers written onto the toll tickets and those they actually look at on the vehicle registration plates. As long as the inventors' knowledge, the vehicle registration plate images are not stored so as to be searchable later.

There are a considerable number of troubles in collecting tolls due to inappropriate use of the toll road. In one case, a driver may use a toll road without receiving a toll ticket at the ticket issuing gate intentionally or accidentally. This may result in that the toll to be charged to the driver cannot be appropriately determined, because the driving distance over which the driver drives the vehicle on the toll road cannot be surely determined by the toll collector. Such situation may occur in a case that a driver loses the toll ticket after receiving the toll ticket. In another case, a driver may run through the toll gate without paying the toll. In still another case, a machine for Electronic Toll Collection (ETC) at an entrance gate does not work due to maintenance or other reasons, and the toll to be charged to a vehicle going on the toll road cannot be determined at the exit toll gate.

One approach for addressing such troubles is to install a video camera at the ticket issuing gate and/or the toll gate, which takes and records images of the entrance and/or exit of the toll road on video tapes; this allows searching an illegally-passing vehicle from a playback image of the video tapes. However, it undesirably takes a long time to search the illegally-passing vehicle from the video tape image, because images and passing vehicles are not associated each other.

Japanese Patent Laid-Open Patent Application No. 2000-315268 discloses an electronic toll collection machine which is additionally provided for an ETC system for recovering accidental errors in electronic toll collection. The disclosed electronic toll collection system includes: receiving means for receiving vehicle information of a vehicle from which a toll cannot be corrected by the electronic toll collection system; processing means for performing toll collection processing of the vehicle associated with the vehicle information received by the receipt means; and transmission means for transmitting the vehicle information of the vehicle after completion of the toll collection processing by the processing mean.

### Summary of the Invention

An object of the present invention is to provide a vehicle registration plate archive system for facilitating searching a desired vehicle from vehicles going on a toll road.

In an aspect of the present invention, a vehicle registration plate archive system is provided with an exit-side vehicle registration plate imaging device provided at an exit toll gate to obtain an exit-side vehicle registration plate image which is an image of a vehicle registration plate of a vehicle passing through the exit toll gate; an exit monitoring apparatus monitoring and controlling the exit-side vehicle registration plate imaging device; an entrance-side vehicle registration plate imaging device provided at an entrance gate to obtain an entrance-side vehicle registration plate image which is an image of a vehicle registration plate of a vehicle passing through the entrance gate; an entrance monitoring apparatus monitoring and controlling the entrance-side vehicle registration plate imaging device; and an information processing apparatus connected with the exit and entrance monitoring apparatuses. The information processing apparatus includes: an exit information database storing the exit-side vehicle registration plate image; an entrance information database storing the entrance-side vehicle registration plate image; and a processing unit adapted to search the exit-side vehicle registration plate image and the entrance-side vehicle registration plate image for determining whether the exit-side vehicle registration plate image matches with a vehicle registration number indicated on the entrance-side vehicle registration plate image.

In one embodiment, the vehicle registration plate archive system may further include an automatic toll collection machine provided at the exit toll gate and configured to collect a toll, the automatic toll collection machine being connected with the exit monitoring apparatus and the exit-side vehicle registration plate imaging device. In this case, it is preferable that the exit-side vehicle registration plate image is transmitted to the information processing apparatus through the exit monitoring apparatus and stored in the exit information database, in response to an instruction from the automatic toll collection machine.

When the vehicle registration plate archive system further includes a departure detection apparatus provided at the exit toll gate, and configured to detect departure of the vehicle passing through the exit toll gate, it is preferable that the exit-side vehicle registration plate image is transmitted to the information processing apparatus through the exit monitoring apparatus and stored in the exit information database, when the departure detection apparatus detects departure of the vehicle passing through the exit toll gate without the automatic toll collection machine collecting a proper toll from the vehicle passing through the exit toll gate.

In another aspect of the present invention, a method of operating a vehicle registration plate archive system includes:
obtaining an entrance-side vehicle registration plate image which is an image of a vehicle registration plate of a vehicle passing through an entrance gate;
storing the entrance-side vehicle registration plate image in an entrance information database provided in an information processing apparatus;
obtaining an exit-side vehicle registration plate image which is an image of a vehicle registration plate of a vehicle passing through an exit toll gate;
storing the exit-side vehicle registration plate image in an exit information database provided in the information processing apparatus;
searching the entrance-side vehicle registration plate image and the exit-side vehicle registration plate image from the entrance and exit information databases; and
determining whether the exit-side vehicle registration plate image matches with a vehicle registration number indicated on the entrance-side vehicle registration plate image.

When an automatic toll collection machine is provided at the exit toll gate, it is preferable that the exit-side vehicle registration plate image is transmitted to the information processing apparatus and stored in the exit information database, in response to an instruction from the automatic toll collection machine.

When a departure detection apparatus is provided at the exit toll gate, the exit-side vehicle registration plate image is transmitted to the information processing apparatus and stored in the exit information database, when the departure detection apparatus detects departure of the vehicle passing through the exit toll gate without the automatic toll collection machine collecting a proper toll from the vehicle passing through the exit toll gate.

As thus described, the present invention provides a vehicle registration plate archive system and a method of operating the same, which facilitates searching a desired vehicle from vehicles going on a toll road by storing vehicle registration plate images of vehicles taken at a ticket issuing gate and a toll gate on the toll road in a searchable format.

### Brief Description of the Drawings

Fig. 1 shows a configuration of a vehicle registration plate archive system according to the present invention;
Fig. 2 shows data contents of an entrance information database; and
Fig. 3 shows data contents of an exit information database.

### Description of Preferred Embodiments

Preferred embodiments of a vehicle registration plate archive system and a method of operating the same according to the present invention will be described below with reference to the attached drawings.

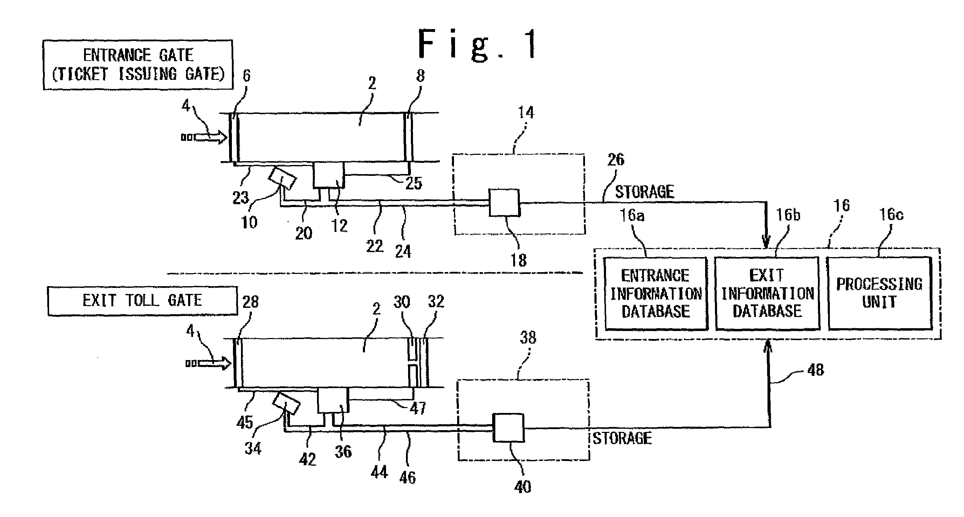

Fig. 1 shows a configuration of a vehicle registration plate archive system in one embodiment of the present invention. A description is first given of an entrance gate system provided at an entrance gate (or a ticket issuing gate) of a toll road. The entrance gate system is provided with a vehicle classification apparatus 6, a departure detection apparatus 8, an entrance-side vehicle registration plate imaging device 10, and an automatic ticket issuing machine 12. The vehicle classification apparatus 6 identifies the type of each vehicle passing through the entrance gate along the approaching direction 4. For example, the vehicle classification apparatus 6 determines whether the target vehicle is classified as a "large" vehicle or a "small" vehicle, and so on. The entrance-side vehicle registration plate imaging device 10 obtains an image of the vehicle registration plate of each vehicle. The automatic ticket issuing machine 12 is installed next to the entrance-side vehicle registration plate imaging device 10 to deliver a toll ticket to the driver of each vehicle. The automatic ticket issuing machine 12 is connected with the entrance-side vehicle registration plate imaging device 10 through a communication line 20. The departure detection apparatus 8 is additionally installed, which detects the departure of each vehicle after the reception of the toll ticket.

An entrance monitoring office 14 is located next to the entrance gate. Provided in the entrance monitoring office 14 is an entrance monitoring panel 18. The entrance monitoring panel 18 is connected to the automatic ticket issuing machine 12 and the entrance-side vehicle registration plate imaging device 10 through communication lines 22 and 24, respectively. The entrance monitoring panel 18 is used to monitor and control the operations of the automatic ticket issuing machine 12 and the entrance-side vehicle registration plate imaging device 10.

An information processing apparatus 16 is provided separately from the entrance monitoring office 14. The information processing apparatus 16 is connected with the entrance monitoring panel 18 through a communication line 26.

A description is then given of a toll gate system provided at an exit toll gate of the toll road. The toll gate system is provided with a vehicle classification apparatus 28, a gate arm mechanism 30, a departure detection apparatus 32, and an exit-side vehicle registration plate imaging device 34. The vehicle classification apparatus 28 identifies the type of each vehicle going on the exit lane along the approaching direction 4. For example, the vehicle classification apparatus 28 determines whether the target vehicle is classified as a "large" vehicle or a "small" vehicle. The exit-side vehicle registration plate imaging device 34 obtains an image of the vehicle registration plate of each vehicle. The automatic toll collection machine 36 is installed next to the exit-side vehicle registration plate imaging device 34 to collect the toll from the driver of each vehicle. The automatic toll collection machine 36 is connected with the exit-side vehicle registration plate imaging device 34 through a communication line 42. The gate arm mechanism 30 blocks the starting of each vehicle until the driver of the vehicle properly pays the toll. The departure detection apparatus 32 detects the departure of each vehicle passing through the exit toll gate. The departure detection apparatus 32 is connected to the automatic toll collection machine 36 through a communication line 47.

An exit monitoring office 38 is provided next to the toll gate. An exit monitoring panel 40 is placed in the exit monitoring office 38. The exit monitoring panel 40 is connected to the automatic toll collection machine 36 and the exit-side vehicle registration plate imaging device 34 through communication lines 44 and 46, respectively. The exit monitoring panel 40 is used to monitor and control the operations of the automatic toll collection machine 36 and the exit-side vehicle registration plate imaging device 34.

The exit monitoring panel 40 is connected to an information processing apparatus 16 through a communication line 48. The information processing apparatus 16 includes an entrance information database 16a, an exit information database 16b and a processing unit 16c.

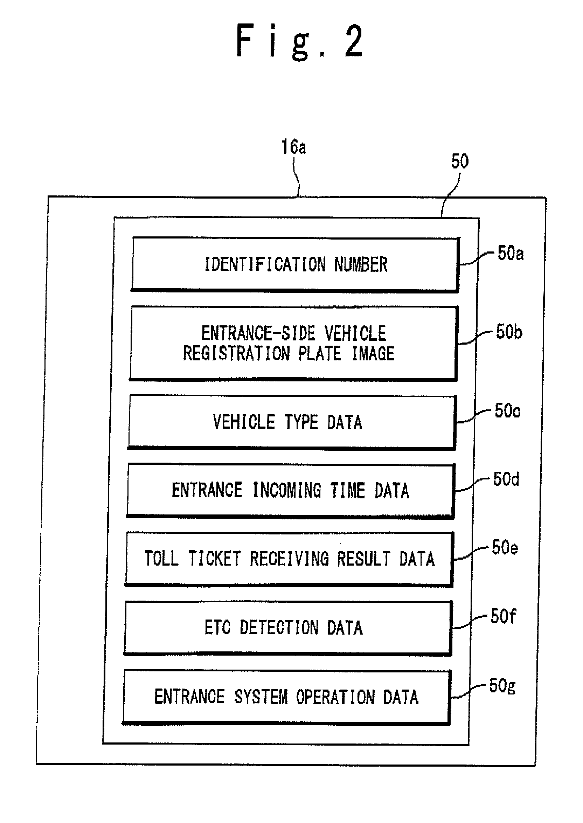

Fig. 2 shows data contents of the entrance information database 16a. The entrance information database 16a stores entrance information 50 for each vehicle therein. In other words, the entrance information 50 is generated for each vehicle going on the toll road. The entrance information 50 includes an identification number 50a, an entrance-side vehicle registration plate image 50b, vehicle type data 50c, entrance incoming time data 50d, toll ticket receiving result data 50e, ETC detection data 50f, and entrance system operation data 50g. In one embodiment, the entrance information database 16a is prepared in a high speed large capacity magnetic storage device.

The identification number 50a is assigned to each passing vehicle and used to identify the entrance-side vehicle registration plate image 50b as described below. The processing unit 16c of the information processing apparatus 16 assigns the identification number 50a to the entrance-side vehicle registration plate image 50b and stores the identification number 50a in the entrance information database 16a. In a preferred embodiment, the identification number 50a may include the vehicle registration plate number obtained by optical character recognition of the entrance-side vehicle registration plate image 50b, for facilitating the searching of the identification number 50a. In an alternative embodiment, the identification number 50a may be a randomly-determined number.

The entrance-side vehicle registration plate image 50b is still image data obtained by imaging of the vehicle registration plate of the vehicle by the entrance-side vehicle registration plate imaging device 10. The entrance-side vehicle registration plate image 50b is transmitted to the entrance monitoring panel 18 through the communication line 24, and then stored in the entrance information database 16a of the information processing apparatus 16 after being transmitted to the information processing apparatus 16 through the communication line 26.

The vehicle type data 50c indicate the type of each vehicle identified by the vehicle classification apparatus 6. The vehicle type data 50c are transmitted from the vehicle classification apparatus 6 to the automatic ticket issuing machine 12 through the communication line 23, and then stored in the entrance information database 16a after being transmitted to the information processing apparatus 16 through the communication line 22 and the entrance monitoring panel 18.

The entrance incoming time data 50d indicate the time when the entrance-side vehicle registration plate imaging device 10 takes the entrance-side vehicle registration plate image 50b. The entrance incoming time data 50d is transmitted to the entrance monitoring panel 18 through the communication line 24, and then stored in the entrance information database 16a after being transmitted to the information processing apparatus 16 through the communication line 26. In an alternative embodiment, the entrance incoming time data 50d may be transmitted from the entrance-side vehicle registration plate imaging device 10 to the automatic ticket issuing machine 12 through the communication line 20, to the entrance monitoring panel 18 through the communication line 22, and to the information processing apparatus 16 through the communication line 26, and then stored in the entrance information database 16a.

The toll ticket receiving result data 50e indicate whether or not a toll ticket is received by the driver from the automatic ticket issuing machine 12. The departure detection apparatus 8 is connected to the automatic ticket issuing machine 12 through the communication line 25. When the departure detection apparatus 8 detects the departure of the vehicle without the driver receiving the toll ticket, the automatic ticket issuing machine 12 generates the toll ticket receiving result data 50e to indicate that the toll ticket is not received, and transmits the toll ticket receiving result data 50e to the entrance monitoring panel 18 through the communication line 22. The toll ticket receiving result data 50e is transmitted to the information processing apparatus 16 through the communication line 26 and stored in the entrance information database 16a.

The ETC detection data 50f indicate whether or not the ETC system has successfully recognized the passage of the vehicle at the entrance gate, when the vehicle is provided with an on-board ETC unit. In a case that the target vehicle with the an-board ETC unit passes through the entrance gate of the toll road when the ETC system does not normally operate for maintenance or other reasons, for example, the automatic ticket issuing machine 12 transmits the ETC detection data 50f to the entrance monitoring panel 18 through the communication line 22, to indicate that the target vehicle is not normally detected by the ETC system. Furthermore, the ETC detection data 50f are transmitted to the information processing apparatus 16 through the communication line 26, and then stored in the entrance information database 16a.

The entrance system operation data 50g indicate whether or not the respective systems provided at the entrance gate of the toll road normally operate. In a case that a specific system at the entrance gate does not work due to maintenance or other reasons when a vehicle passes through the entrance gate, for example, the automatic ticket issuing machine 12 transmits the entrance system operation data 50g to the entrance monitoring panel 18 through the communication line 22, to indicate that the specific system does not normally operate. Furthermore, the entrance system operation data 50g are transmitted to the information processing apparatus 16 through the communication line 26, and then stored in the entrance information database 16a.

The entrance information 50 is prepared for each vehicle in the entrance information database 16a, and various data related to each vehicle are searchable from the entrance information database 16a. When the identification number 50a and/or the entrance-side vehicle registration plate image 50b is designated as a search query, for example, the processing unit 16c of the information processing apparatus 16 searches the vehicle type data 50c, the entrance incoming time data 50d, the toll ticket receiving result data 50e, the ETC detection data 50f and the entrance system operation data 50g, which are associated with the designated identification number 50a and/or entrance-side vehicle registration plate image 50b in the entrance information database 16a. The use of the entrance information 50 will be described later.

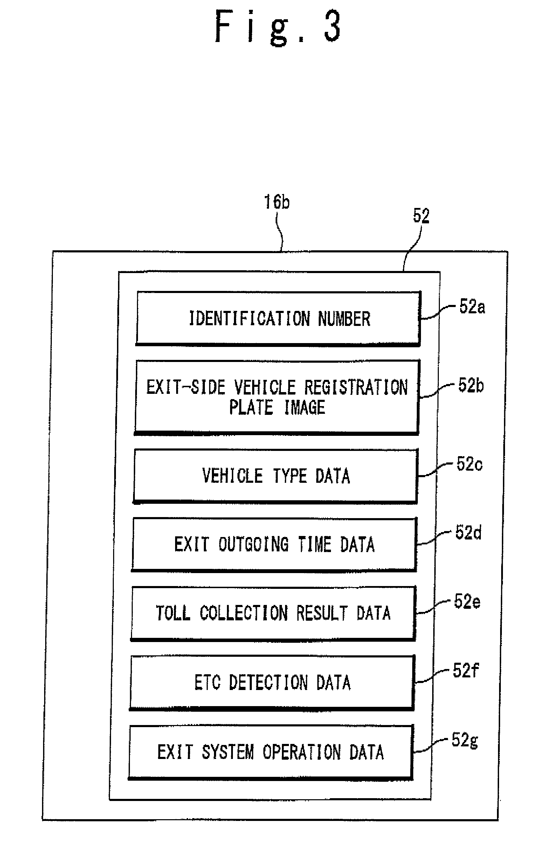

Fig. 3 shows data contents of the exit information database 16b. The exit information database 16b stores exit information 52 of each vehicle therein. In other words, the exit information 52 is prepared for each vehicle. The exit information 52 includes an identification number 52a, an exit-side vehicle registration plate image 52b, vehicle type data 52c, exit outgoing time data 52d, toll collection result data 52e, ETC detection data 52f, and exit system operation data 52g. In one embodiment, the exit information database 16b is prepared in a high speed large capacity magnetic storage device.

The identification number 52a is assigned to each passing vehicle and used to identify the exit-side vehicle registration plate image 52b as described below. The processing unit 16c of the information processing apparatus 16 assigns the identification number 52a to the exit-side vehicle registration plate image 52b and stores the identification number 52a in the exit information database 16b. In a preferred embodiment, the identification number 52a may include the vehicle registration plate number obtained by character recognition of the exit-side vehicle registration plate image 52b, for facilitating the search of the identification number 52a. In an alternative embodiment, the identification number 52a may be a randomly-determined number.

The exit-side vehicle registration plate image 52b is still image data obtained by imaging of the vehicle registration plate of the vehicle by the exit-side vehicle registration plate imaging device 34. The exit-side vehicle registration plate image 52b is transmitted to the exit monitoring panel 40 through the communication line 46, and then stored in the exit information database 16b after being transmitted to the information processing apparatus 16 through the communication line 48.

The vehicle type data 52c indicate the type of the vehicle identified by the vehicle classification apparatus 28. The vehicle type data 52c are transmitted from the vehicle classification apparatus 28 to the automatic ticket issuing machine 36 through the communication line 45, and then stored in the exit information database 16b after being transmitted to the information processing apparatus 16 through the communication line 44 and the exit monitoring panel 40.

The exit outgoing time data 52d indicate the time when the exit-side vehicle registration plate imaging device 34 takes the exit-side vehicle registration plate image 52b. The exit outgoing time data 52d is transmitted to the exit monitoring panel 40 through the communication line 46, and then stored in the exit information database 16b after being transmitted to the information processing apparatus 16 through the communication line 48. In an alternative embodiment, The exit outgoing time data 52d may be transmitted from the exit-side vehicle registration plate imaging device 34 to the automatic toll collection machine 36 through the communication line 42, to the exit monitoring panel 40 through the communication line 44, and to the information processing apparatus 16 through the communication line 48, and then stored in the exit information database 16b.

The toll collection result data 52e indicate whether or not the automatic toll collection machine 36 properly corrects the toll from the driver. The departure detection apparatus 32 is connected to the automatic toll collection machine 36 through the communication line 47. When the departure detection apparatus 32 detects the departure of the vehicle without the driver appropriately paying the toll, the automatic toll collection machine 36 generates the toll collection result data 52e to indicate that the driver does not pay the toll appropriately, and transmits the toll collection result data 52e to the exit monitoring panel 40 through the communication line 44. The toll collection result data 52e is transmitted to the information processing apparatus 16 through the communication line 48, and stored in the exit information database 16b.

The ETC detection data 52f indicate whether or not the ETC system has recognized the passage of the vehicle at the exit toll gate, when the vehicle is provided with an on-board ETC unit. In a case that the target vehicle with the on-board ETC unit passing through the exit toll gate of the toll road when the ETC system does not normally operate due to maintenance or other reasons, the automatic toll collection machine 36 transmits the ETC detection data 52f to the exit monitoring panel 40 through the communication line 42, to indicate that the target vehicle is not normally detected. Furthermore, the ETC detection data 52f are transmitted to the information processing apparatus 16 through the communication line 48, and then stored in the exit information database 16b.

The exit system operation data 52g indicate whether or not the respective systems provided at the exit toll gate of the toll road normally operate. In a case that a specific system at the exit toll gate does not work due to maintenance or other reasons when the vehicle passes through the exit toll gate, for example, the automatic toll collection machine 36 transmits the exit system operation data 52g to the exit monitoring panel 40 through the communication line 44, to indicate that the specific system does not normally operate. Furthermore, the exit system operation data 52g is transmitted to the information processing apparatus 16 through the communication line 48, and then stored in the exit information database 16b.

The exit information 52 is prepared for each vehicle in the exit information database 16b, and various data related to each vehicle are searchable from the exit information database 16b. When the identification number 52a and/or the exit-side vehicle registration plate image 52b is designated as a search query, the processing unit 16c of the information processing apparatus 16 searches the vehicle type data 52c, the exit outgoing time data 52d, the toll collection result data 52e, the ETC detection data 52f and the exit system operation data 52g, which are associated with the identification number 52a and/or the exit-side vehicle registration plate image 52b in the exit information database 16b. The use of the exit information 52 will be described below.

A description is then given of the search conducted on the entrance information 50 and the exit information 52 in the following. The example described below is directed to a case that a target vehicle passes through the entrance gate of the toll road after the driver intentionally or accidentally fails to receive the toll ticket from the automatic ticket issuing machine 12. At the entrance gate, the entrance-side vehicle registration plate imaging device 10 takes an entrance-side vehicle registration plate image 50b of the target vehicle. This is followed by generating an identification number 50a, vehicle type data 50c, entrance incoming time data 50d, toll ticket receiving result data 50e, ETC detection data 50f and entrance system operation data 50g for the target vehicle. The generated data (including the identification number 50a, the vehicle type data 50c, the entrance incoming time data 50d, the toll ticket receiving result data 50e, the ETC detection data 50f and the entrance system operation data 50g) are stored in the entrance information database 16a.

When the target vehicle passes through the exit toll gate after going through the toll road, the exit-side vehicle registration plate imaging device 34 takes an exit-side vehicle registration plate image 52b of the target vehicle. This is followed by generating an identification number 52a, vehicle type data 52c, exit outgoing time data 52d, toll collection result data 52e, ETC detection data 52f and exit system operation data 52g for the target vehicle, and storing these data in the exit information database 16b.

What may happen is that the target vehicle is prohibited to pass through the exit toll gate by a toll collector, since the driver of the target vehicle does not receive a toll ticket from the automatic ticket issuing machine 12 at the entrance gate. In such case, the toll is taken from the driver in the procedure as follows:
First, a staff member in the exit monitoring office 38 operates the exit monitoring panel 40, and thereby accesses the information processing apparatus 16 to search the exit-side vehicle registration plate image 52b of the target vehicle obtained by the exit-side vehicle registration plate imaging device 34 from the exit information database 16b. This allows the staff member to check the searched exit-side vehicle registration plate image 52b on a monitor (not shown) of the exit monitoring panel 40. In searching the exit-side vehicle registration plate image 52b, the identification number 52a, the vehicle type data 52c or the exit outgoing time data 52d may be used as a search query.

One issue is that determining the toll to be charged to the driver requires determining the entrance gate through which the target vehicle has passed. Accordingly, the staff member operates the exit monitoring panel 40, and thereby accesses the information processing apparatus 16 to search the entrance-side vehicle registration plate image 50b of the target vehicle obtained by the entrance-side vehicle registration plate imaging device 10 from the entrance information database 16a. This allows the staff member to check the searched entrance-side vehicle registration plate image 50b on a monitor (not shown) of the exit monitoring panel 40. In searching the entrance-side vehicle registration plate image 50b, the identification number 50a, the vehicle type data 50c or the exit outgoing time data 50d may be used as a search query.

An example of the search procedure will be described in the following. In this example, the identification numbers 50a and 52a are defined as the vehicle registration plate number. The staff member searches the exit-side vehicle registration plate image 52b, and confirms the vehicle registration plate number of the target vehicle. This is followed by conducting a search on the entrance information database 16a by using the identification number 50a assigned to the entrance-side vehicle registration plate image 50b as a search query. Let us consider a case when the vehicle registration plate number of the target vehicle is "5379", the identification number 50a assigned to the entrance-side vehicle registration plate image 52b is also "5379", and the vehicle registration plate number manually confirmed from the exit-side vehicle registration plate image 52b is also "5379". In response to the number "5379" being input by the staff member as the search query by using an input device (not shown), the processing unit 16c searches the entrance information 50 having an identification number 50a of "5379" from the entrance information database 16a. This is followed by displaying the exit-side vehicle registration plate image 52b and the entrance-side vehicle registration plate image 50b of the searched entrance information 50 on a monitor (not shown) . This allows comparing the entrance-side and exit-side vehicle registration plate images 50b and 52b. Additionally, other data of the searched entrance information 50 associated with the target vehicle (the vehicle type data 50c, the entrance incoming time data 50d, the toll ticket receiving result data 50e, the ETC detection data 50f and the entrance system operation data 50g) may be also displayed on the monitor.

When the entrance-side vehicle registration plate image 50b is determined to match the exit-side vehicle registration plate image 52b, this allows identifying the entrance gate (or the ticket issuing gate) through which the target vehicle has passed. In this case, the toll is charged to the driver of the target vehicle after appropriately determining the toll on the basis of the identified entrance gate. The identification of the entrance gate is achieved by using the entrance system operation data 50g of the searched entrance information 50. The entrance system operation data 50g are one-to-one correlated with the entrance-side vehicle registration plate image 50b in the entrance information 50 of the target vehicle, and this enables identifying the entrance gate through which the target vehicle has passed.

As thus described, the system of this embodiment helps determining the entrance gate through which each vehicle has passed regardless of whether or not the driver has received the toll ticket. This feature is desirable for various actual implementations cases as described below. In one implementation, the toll road may be provided with a "barrier" gate, which is a passing gate at which magnetic data on the toll ticket are rewritten; the toll is not collected at the "barrier" gate. The system of this embodiment is useful for a case that the toll road is provided with a "barrier" gate. In such toll road, data identifying the entrance gate (or the ticket issuing gate) through which each vehicle has passed may be accidentally erased from the toll ticket, when the magnetic data on the toll ticket are rewritten at the barrier gate. The system of this embodiment effectively deals with this problem. The system of this embodiment is designed to store the entrance-side vehicle registration plate image 50b obtained at the entrance gate. This allows identifying the entrance gate through which each vehicle has passed by searching the entrance-side vehicle registration plate image 50b.

The system of this embodiment is also effective for identifying a vehicle illegally running through the exit toll gate without paying the toll. The system of this embodiment is designed to store the exit-side vehicle registration plate image 52b obtained by the exit-side vehicle registration plate imaging device 34 in the exit information database 16b. This allows the staff member to search the exit-side vehicle registration plate image 52b of the vehicle illegally running through the exit toll gate from the exit information database 16b, operating the processing unit 16c of the information processing apparatus 16. The search of the vehicle illegally running through the exit toll gate is achieved by using the toll collection result data 52e of the exit information 52. The toll collection result data 52e are one-to-one correlated with the exit-side vehicle registration plate image 52b in the exit information 50 associated with the vehicle illegally running through the exit toll gate, and this enables searching the exit-side vehicle registration plate image 52b only of vehicles illegally running through the exit toll gate.

It should be noted that the exit-side vehicle registration plate images 52b obtained by the exit-side vehicle registration plate imaging device 34 are not necessarily stored in the exit information database 16b for all of the vehicles passing through the exit toll gate. For example, the exit-side vehicle registration plate image 52b is not necessary for a vehicle passing through the exit toll gate after properly paying the toll; such vehicle is not an illegally-passing vehicle. In such case, the automatic toll collection machine 36 is configured to send an instruction through the communication line 42 to indicate the exit-side vehicle registration plate imaging device 34 not to transmit the exit-side vehicle registration plate image 52b, when the automatic toll collection machine 36 recognizes that the toll is correctly collected. When the departure detection apparatus 32 detects departure of the vehicle passing through the exit toll gate without the automatic toll collection machine 36 collecting a proper toll from the vehicle passing through the exit toll gate, on the other hand, the automatic toll collection machine 36 sends an instruction through the communication line 42, and thereby indicates the exit-side vehicle registration plate imaging device 34 to transmit the exit-side vehicle registration plate image 52b. In this case, the exit-side vehicle registration plate image 52b is transmitted to the information processing apparatus 16 and stored in the exit information database 16b.

It is apparent that the present invention is not limited to the above-described embodiments, which may be modified and changed without departing from the scope of the invention.

## Claims

1. A vehicle registration plate archive system comprising:
an exit-side vehicle registration plate imaging device (34) provided at an exit toll gate to obtain an exit-side vehicle registration plate image which is an image of a vehicle registration plate of a vehicle passing through said exit toll gate,
an exit monitoring apparatus (40) monitoring and controlling said exit-side vehicle registration plate imaging device (34);
an entrance-side vehicle registration plate imaging device (10) provided at an entrance gate to obtain an entrance-side vehicle registration plate image which is an image of a vehicle registration plate of a vehicle passing through said entrance gate,
an entrance monitoring apparatus (18) monitoring and controlling said entrance-side vehicle registration plate imaging device (10); and
an information processing apparatus (16) connected with said exit and entrance monitoring apparatuses (18, 40),
wherein said information processing apparatus (16) includes:
an exit information database (16b) storing said exit-side vehicle registration plate image;
an entrance information database (16a) storing said entrance-side vehicle registration plate image; and
a processing unit (16c) adapted to search said exit-side vehicle registration plate image and said entrance-side vehicle registration plate image for determining whether said exit-side vehicle registration plate image matches with a vehicle registration number indicated on the entrance-side vehicle registration plate image.

2. The vehicle registration plate archive system according to claim 1, further comprising:
an automatic toll collection machine (36) provided at said exit toll gate and configured to collect a toll,
wherein said automatic toll collection machine (36) is connected with said exit monitoring apparatus (40) and said exit-side vehicle registration plate imaging device (34), and
wherein said exit-side vehicle registration plate image is transmitted to said information processing apparatus (16) through said exit monitoring apparatus (40) and stored in said exit information database (16b), in response to an instruction from said automatic toll collection machine(36).

3. The vehicle registration plate archive system according to claim 2, further comprising:
a departure detection apparatus (32) provided at said exit toll gate, and configured to detect departure of said vehicle passing through said exit toll gate,
wherein said exit-side vehicle registration plate image is transmitted to said information processing apparatus (16) through said exit monitoring apparatus (40) and stored in said exit information database (16b), when said departure detection apparatus (32) detects departure of said vehicle passing through said exit toll gate without said automatic toll collection machine (36) collecting a proper toll from said vehicle passing through said exit toll gate.

4. A method of operating a vehicle registration plate archive system, comprising:
obtaining an entrance-side vehicle registration plate image which is an image of a vehicle registration plate of a vehicle passing through an entrance gate;
storing said entrance-side vehicle registration plate image in an entrance information database (16a) provided in an information processing apparatus (16);
obtaining an exit-side vehicle registration plate image which is an image of a vehicle registration plate of a vehicle passing through an exit toll gate;
storing said exit-side vehicle registration plate image in an exit information database (16b) provided in said information processing apparatus (16);
searching said entrance-side vehicle registration plate image and said exit-side vehicle registration plate image from said entrance and exit information databases (16a, 16b);
determining whether said exit-side vehicle registration plate image matches with a vehicle registration number indicated on the entrance-side vehicle registration plate image.

5. The method according to claim 4, wherein said exit-side vehicle registration plate image is transmitted to said information processing apparatus and stored in said exit information database (16b), in response to an instruction from an automatic toll collection machine (36) configured to collect a toll.

6. The method according to claim 5, wherein said exit-side vehicle registration plate image is transmitted to said information processing apparatus and stored in said exit information database (16b), when a departure detection apparatus (32) provided at said exit toll gate detects departure of said vehicle passing through said exit toll gate without said automatic toll collection machine (36) collecting a proper toll from said vehicle passing through said exit toll gate.
